# EUROPEAN PATENT APPLICATION

(11) **EP 0 998 153 A2**
(43) Date of publication of application: **03.05.2000**
(21) Application number: 99308152.0
(22) Date of filing: 15.10.1999
(51) Int. Cl.: H04Q 3/00

(54) **System and method for ubiquitous services on a packet switched network**

(30) Priority: 28.10.1998 US 182036
(71) Applicant: Priority Call Management, Inc., Wilmington, MA 01887 (US)
(72) Inventor: Melampy, Patrick J, Pepperell, MA 01463 (US); Penfield, Robert F, Maynard, MA 01754 (US)
(74) Representative: Style, Kelda Camilla Karen

(57) **Abstract**

A system and method for providing ubiquitous Intelligent Peripheral (IP) services by directing a call received from a subscriber at a foreign Service Switching Point (SSP) to the subscriber's home IP via a packet switched network (ATM or Voice over IP). The Home IP provides a customized and/or enhanced service that is not provided by a foreign IP connected to the foreign SSP. The customized and/or enhanced services include call waiting, speed dialing, voice-activated dialing, voice-recognition service, voicemail, faxmail, and the like. The foreign SSP contains Dynamically Transportable Logic that is used to access a data record which identifies the location of the Home IP from call elements associated with the subscriber's call. The call elements include an ANI of the call, a DNIS of the call, a redirect number of the call, an OCN of the call, a PIN inputted by the subscriber, and a password inputted by the subscriber.

## Description

### FIELD OF THE INVENTION

The present invention relates generally to the field of electronic transaction processing via IP telephony, and more specifically to providing ubiquitous IP services in a mixed packet and circuit switched network.

### BACKGROUND OF THE INVENTION

Packet Switched networks are viewed in the telephony art as a very efficient mechanism for transmitting digitally encoded voice. With the advent of standards for signaling and compression, it appears that a new world-wide standard is emerging which may reduce costs for carriers by simplifying interconnection, avoiding international regulatory costs and barriers, and utilizing less bandwidth for voice calls.

The standards that are emerging for packet switching are defined collectively as H.323. These standards are colloquially known as Voice over IP, or commonly shortened to VoIP. The standards define methods for establishing telephone calls (H.245/Q.931) with compressed audio (Q.723.2). These standards are all available from the International Telecommunications Union (ITU) and are incorporated herein by reference.

Data networking companies such as Cisco of San Jose California produce products that conform to these standards, such as the Cisco 5300 Router. These products can be used to convert traditional telecommunications transport such as T1 with channel associated signaling or common channel signaling to H.245/Q.723.2 and back. Thus traditional voice is routed over IP networks efficiently. By incorporating other network elements such as packet switches, it is believed that new networks which carry voice and data efficiently will replace and/or compete with today's telecommunications transit networks.

### Subscriber IP Services Current Art and Issues

Subscribers who travel and use voicemail, voice-activated services, and information services typically call the system that provides those services using traditional methods. Typically, to provide the highest grade of service, companies offer toll free access for subscribers. When traveling outside the country, most service providers offer international toll-free numbers to call the home system at considerable cost to the service provider.

Many of these large service providers would prefer to establish platforms in many foreign countries to provide subscriber services in a ubiquitous fashion. However, certain subscriber services require large amounts of stored data and are therefore best served from a "home" location. There are several reasons for this:
1. *The stored data is unique to the physical equipment at the home*. For example, a certain voice recognition product, with a particular set of stored rules, may provide a voice-enabled interface optimized for an American speaking English. It is commonly known that voice templates, DSP algorithms, etc., are particular to a solution, and are not generic.
2. *The stored data is machine and version dependent*. For example, voice recorded as a message may be encoded using a method that is machine dependent. Some voicemail systems store digitized voice as Continuously Variable Slope Delta (CVSD) modulated data while others store digitized voice as Adaptive Differential Pulse Code Modulated (ADPCM) data. The conversion from one format to another is inefficient and results in delays, and still other systems use additional formats.
3. *The data required to reconstruct the entire service may not be required*. In many cases, subscribers call into their enhanced service provider's platform for only one of many offered services. For instance, one subscriber may call to pickup messages, listen to just two of 20 messages, and hang-up. Another subscriber who has voice-activated dialing, voicemail, and stock quote capability, might call in and only access stock quotes. Thus, moving all of the data to reconstruct all of the services may be inefficient.
4. *A delay may be present when reconstructing services*. If the data is moved to the caller there may be a substantial delay before the services can be offered. This is directly related to the amount of data to be transported and the available network bandwidth. For example, assume that a subscriber has ten new voice messages in the subscriber's voicemail and each voicemail message has an average duration of 60 seconds. A voicemail message is stored at a rate of 3,072 bytes per second. Therefore, it would require the transmittal of 1,843,200 bytes (i.e., 10 x 60 x 3,072) to transfer the ten voicemail messages from the subscriber's Home IP to the subscriber's foreign location. It should be noted that the subscriber cannot access a given voicemail message until the transfer of all the voicemail messages is completed. The delay in message accessibility is a factor of the available bandwidth. In contrast, a VoIP packet switched network can transfer the same ten voicemail messages at a transmission rate of 1,365 bytes per second (due to data compression techniques). As a result, it only requires the transmittal of 819,000 bytes (i.e., 10 x 60 x 1,365) to transfer the ten voicemail messages from the subscriber's Home IP to the subscriber's foreign location. It should be noted that individual voicemail messages are transferred after being selected by the subscriber. Accordingly, the transfer of all ten messages is spread out over the 10 minute period that the subscriber is listening to the messages. Thus with VoIP, the total transit throughput is both lower and spread out over time.
5. *Billing/Integration*. Also, since many large service providers perform billing and administration on a decentralized basis, a large distributed network may have distributed customer care and billing systems. Therefore, one disadvantage encountered in such a large distributed network is having to ship billing records from foreign systems to local systems.
6. *Certain subscriber features require all calls to be on the same platform*. Features like "call waiting" or "meet-me" require that all of the active calls for a subscriber be managed by one platform, i.e., the same hardware and software. Therefore, some subscriber features, like "call waiting" and "meet me", can not be accessed by a subscriber in a foreign system even if data is moved from the "home" system to the foreign system.

Today's enhanced service platforms offer different forms of internetworking. There are standards for VPIM, AMIS, and AMIS-D (Electronic Messaging Association Standards or EMA) for exchanging messages. Many voicemail companies have also taken a public position in support of IMAP-4 for manipulating messages between platforms.

All of the internetworking defined allows for message exchange and message retrieval. Thus the state of the art permits subscribers to call into foreign systems and retrieve their messages locally. However, much of the functionality including "reply" or "forward" may not operate correctly since the local system may not have the necessary access to the directory of users on the remote system. Although it is conceivable that LDAP (Lightweight Directory Access Protocol) could be overlaid to provide a mechanism for global message retrieval and submission, the resulting ubiquitous messaging service would lack the highly personalized delivery of service associated with a subscriber's home system. For example, the foreign system's prompts, options, and key presses to save a message may be different than the home system's prompts, options, and key presses to save a message.*Least Cost Routing and Management through a large packet switched network (ATM or VoIP)*

Large packet switched networks are excellent at routing packets from source to destination. With the inclusion of the QoS (Quality of Service) and other mechanisms to guarantee quality and performance, these networks have become effective mechanisms for transporting voice as well as data.

With the advent of H.323 standards, a gatekeeper concept was developed which permits a form of telephone signaling (Q.931) over packet switched networks. The gatekeepers were added to perform several functions. One function is to provide access control to resources managed by the gatekeeper. Another function is to provide addressing and allocation services to enable circuit based signaling protocols to work. Thus Q.931 (ISDN Call Control) can be used to establish calls with a gatekeeper.

The gatekeeper mechanism can perform sufficiently in many cases. However, drawbacks are believed to exist in today's H.323 VoIP networks. In particular, the standard mechanisms for Least Cost Routing and selection of a gatekeeper are inadequate because circuit availability, on the PSTN side of the gateway, is unknown to the gatekeeper. In other words, a gatekeeper does not know when an apparently unused PSTN circuit is in fact being used, thereby decreasing the likelihood that available bandwidth will be used optimally.

### Glossary

The following definitions and acronyms will assist the reader in comprehending the enclosed description of the present invention:
- VoIP: Voice over Internet Protocol
- IP: Intelligent Peripheral - A media resource element in an Intelligent Network (IN) that provides services including, but not limited to, voice announcements, voice prompts, voice mail, voice recognition, help guidance, gathering subscriber-entered touch tones (DTMF), and transmitting and receiving faxes. Some examples of IP media resources are the D240SC-T1 manufactured by Dialogic and the AG-Quad manufactured by Microsystems.
- SSP: Service Switching Point - A network element that can receive, make, and cross connect telephone calls (e.g., digital telephone switch).
- SMP: Service Management Point - Manages the network and provides base line configuration data to keep the network operational.
- SCP: Service Control Point - A computer database that stores information about the network services and subscribers. The SCP also manages IP resources by controlling an SSP's ability to access IP resources.
- Gateway: A network element that acts as an interface between a circuit switched network and a packet switched network. One example of a gateway is the Cisco 5300 router manufactured by Cisco of San Jose, California.
- Gatekeeper: A network element that controls the flow of data through a gateway.
- PSTN: Public Switched Telephone Network.
- ATM: Asynchronous Transfer Mode. A packet switch currently used to carry data and voice.
- UDP/IP: Universal Datagram Protocol over Internet Protocol networks. This is a messaging service used to build the signaling system disclosed in the present invention.
- TCP/IP: Internet Protocol Network.
- SS7 ISUP: A signaling system commonly used in central offices.
- DTL: Dynamic Transportable Logic - an algorithm that directs an inbound call to an SCP that serves a database fragment needed to complete the inbound call. The DTL directs the inbound call based on the input characteristics of the incoming call. More specifically, the DTL uses one or more of the following input characteristics to direct the call. An Automatic Number Identification (ANI) which provides the source number of an inbound call to the host SSP. A Dialed Number Identification System (DNIS) code that provides the number dialed by the caller to reach the host SSP. An originally called number (OCN) that provides a number dialed before the call arrived at the host SSP. (It should be noted that the OCN is also sometimes referred to as the Redirect Number). A PIN or account number inputted by a user. (The PIN or account number is usually DTMF or spoken words processed into digits by the SSP). A physical port or circuit that a call arrives on. Information digits that provide an indication of what kind of terminal the caller is dialing from (e.g., a pay phone, hotel phone, or prison phone).
- Database Fragment: A logical section of a database in which subscriber data (e.g., account balance, Home IP address) is stored. A single SCP may serve hundreds of database fragments and the database fragments may migrate from one SCP to another SCP. The determination of which database fragment to access at a given time is part of the functionality of the DTL. The operation of the database fragment is described below and is described in further detail in copending U.S. Patent Application Serial No. 09/135,607 to MeLampy et al., filed August 18, 1998, incorporated herein in its entirety by reference.
- IPDC: Internet Protocol Device Control. A set of standards being developed by the data networking industry to manage voice traffic over IP networks.

### SUMMARY OF THE INVENTION

To address a shortcoming in the available art, the present invention transports, in real time, the "subscriber session" to a foreign point of presence offering the complete set of features and data remotely that are available when accessing the home system directly.

To address another shortcoming in the available art, the present invention provides a system and method that promotes least cost carrier selection across a packet switched network using mechanisms to detect, in real time, changes in circuit availability on the PSTN side of a gateway.

To address a further shortcoming in the available art, the present invention provides a system and method that promotes least cost routing through a packet switched network in an automatic call distribution environment.

To address still another shortcoming in the available art, the present invention provides a mechanism for selecting the least cost route with a reasonably high certainty that a circuit will be available.

To address yet another shortcoming in the available art, the present invention provides a mechanism for managing bandwidth to various endpoints in the network.

Briefly stated, the present invention provides a system and method for providing ubiquitous Intelligent Peripheral (IP) services by directing a call received from a subscriber at a foreign Service Switching Point (SSP) to the subscriber's home IP via a packet switched network (ATM or Voice over IP). The Home IP provides a customized and/or enhanced service that is not provided by a foreign IP connected to the foreign SSP. The customized and/or enhanced services include call waiting, speed dialing, voice-activated dialing, voice-recognition service, voicemail, faxmail, and the like. The foreign SSP contains Dynamically Transportable Logic that is used to access a data record which identifies the location of the Home IP from call elements associated with the subscriber's call. The call elements include an ANI of the call, a DNIS of the call, a redirect number of the call, an OCN of the call, a PIN inputted by the subscriber, and a password inputted by the subscriber.

An advantageous embodiment of the present invention includes a method for providing ubiquitous intelligent peripheral services, the method comprising the steps of receiving an inbound call from a subscriber, gathering a plurality of call elements associated with the inbound call, deriving a location of a home intelligent peripheral of the subscriber from the gathered plurality of call elements, and connecting the inbound call to the home intelligent peripheral via a packet switched network.

Another advantageous embodiment of the present invention includes a system for providing ubiquitous intelligent peripheral services, the system comprising means for receiving an inbound call from a subscriber, means for gathering a plurality of call elements associated with the inbound call, means for deriving a location of a home intelligent peripheral of the subscriber from the gathered plurality of call elements, and means for connecting the inbound call to the home intelligent peripheral via a packet switched network.

A further advantageous embodiment of the present invention includes a system for receiving a call from a circuit switched network and establishing a call pathway over a packet switched network to provide ubiquitous intelligent peripheral services to a subscriber, the system comprising a home intelligent peripheral that provides a customized service to the subscriber, a home service switching point that connects the home intelligent peripheral to the packet switched network, and a foreign service switching point connected to the packet switched network and the circuit switched network, the foreign service switching point having dynamically transportable logic that facilitates access to the system, the foreign service switching point identifying a location of the home intelligent peripheral via the dynamically transportable logic in response to receiving a call from the subscriber via the circuit switched network.

### BRIEF DESCRIPTION OF THE DRAWINGS

The aforementioned advantages of the present invention as well as additional advantages thereof will be more clearly understood hereinafter as a result of a detailed description of a preferred embodiment of the invention when taken in conjunction with the following drawings.
FIG. 1 is a diagrammatic view of a mixed circuit and packet switched network of the present invention.
FIG. 2 is a diagrammatic view of a message and transaction communication flow that occurs when an inbound call is being connected to a foreign IP in the present invention.
FIG. 3 is a diagrammatic view of a message and transaction communication flow that occurs during a database authentication of a subscriber in the present invention.
FIG. 4 is a diagrammatic view of a message and transaction communication flow that occurs when an inbound call is being connected to a Home IP in the present invention.
FIG. 5 is a diagrammatic view of a message and transaction communication flow that occurs during the selection of an outbound least cost route in the present invention.
FIG. 6 is a diagrammatic view of a message and transaction communication flow that occurs when an outbound call is directed over the outbound least cost route selected in FIG. 5.
FIG. 7 is a table illustrating the call legs established during the message and transaction communication flow of FIGS. 2-6.

### DETAILED DESCRIPTION OF THE DRAWINGS

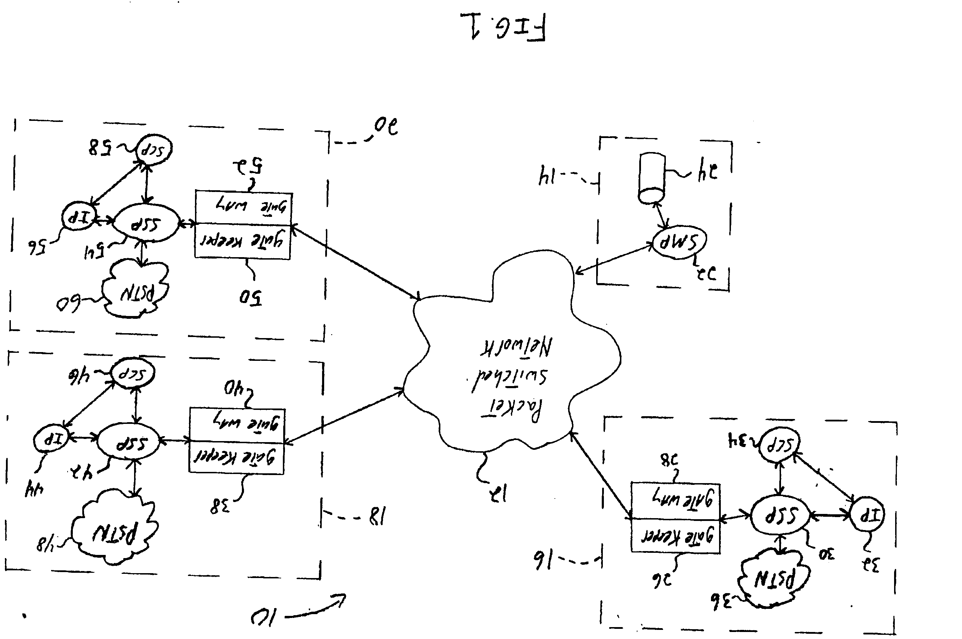

Referring now to FIG. 1, one embodiment of a mixed circuit and packet switching system 10 of the present invention is shown. System 10 includes a packet switched network 12 that interconnects a plurality of nodes 14, 16, 18 and 20. It should be noted that additional nodes can be connected to system 10, as known by those skilled in the art. Node 14 includes an SMP 22 and a database 24 in communication with SMP 22. As discussed below, SMP 22 monitors the SSPs, SCPs, IPs, PSTNs, gateways and gatekeepers in system 10. SMP 22 stores any data collected during the monitoring process in database 24. The collected data may be stored as configuration data or DTL. Configuration data defines the elements and operation of system 10. DTL directs an inbound call to an SCP serving a database fragment. The database fragment contains subscriber-related information that directs the handling of the inbound call.

Node 16 is a subscriber's home node, i.e., where the enhanced and/or customized services (e.g., voicemail, speed dialing, voice-activated dialing, call waiting, etc.) for the subscriber are located. Node 16 includes a gatekeeper 26, a gateway 28, and an SSP 30. Gatekeeper 26 controls the ability of SSP 30 to access packet switched network 12 via gateway 28. Node 16 also includes an IP 32 and an SCP 34 operably connected to SSP 30 through a communication medium. IP 32 provides the enhanced and/or customized services discussed above. SCP 34 controls the ability of a subscriber to access the services provided by IP 32 via SSP 30, as described in further detail below. SSP 30 is also connected to PSTN carriers 36 and monitors the circuit availability in the PSTN carriers 36, as discussed in further detail below.

Node 18 is a foreign node that does not always provide the enhanced and/or customized services provided by Home node 16. It should be noted that when the enhanced and/or customized services are provided by node 18, the services are not provided as efficiently as by Home node 16. The inefficiency exists because node 18 has to receive and reconstruct data before node 18 can provide the enhanced and/or customized services. Node 18 includes a gatekeeper 38, a gateway 40, and an SSP 42. Gatekeeper 38 controls the ability of SSP 42 to access packet switched network 12 via gateway 40. Node 18 also includes an IP 44 and an SCP 46 operably connected to SSP 42 through a communication medium. IP 44 provides the subscriber of home node 16 a subset of the services provided by IP 32. Although IP 44 does not provide enhanced and/or customized services such as voicemail, customized voice prompting, and customized transaction processing, IP 44 can prompt the subscriber for a PIN, an account number, an identification number, a password, and can gather the DTMF or touch tones entered by the subscriber in response to the prompt. SCP 46 controls the ability of the subscriber to access the services provided by IP 44 via SSP 42, as described in further detail below. SSP 42 is also connected to PSTN carriers 48 and monitors the circuit availability in the PSTN carriers 48, as discussed in further detail below.

Node 20, similar to node 18, is a foreign node that does not always provide the enhanced and/or customized services provided by Home node 16. As discussed above, even if the services are provided, the enhanced and/or customized services are not as efficiently provided by node 20 as by Home node 16. Node 20 includes a gatekeeper 50, a gateway 52, and an SSP 54. Gatekeeper 50 controls the ability of SSP 54 to access packet switched network 12 via gateway 52. Node 18 also includes an IP 56 and an SCP 58 operably connected to SSP 54 through a communication medium. IP 56, similar to IP 44, provides the subscriber of the home node 16 a sub-set of the services provided by IP 32. SCP 58 controls the ability of the subscriber to access the services provided by IP 56 via SSP 54, as described in further detail below. SSP 54 is also connected to PSTN carriers 60 and monitors the circuit availability in the PSTN carriers 60, as discussed in further detail below.

SMP 22 periodically receives PING messages from SCPs 34, 46, 58 and SSPs 30, 42, 54. The PING messages from SCPs 34, 46, 58 identify the database fragments stored by each SCP, as well as operational statistics for monitoring purposes. The operational statistics include, but are not limited to, transactions per second, available memory, and alarm data. The PING messages from SSPs 20, 42, 54 include operational statics for monitoring purposes. The operational statics include, but are not limited to, calls per hour, circuit availability, available memory, disk space, and alarm data. If the SMP detects any changes between the configuration data and DTL stored in database 24 and the received PING messages, the SMP updates the stored configuration data and DTL.

SMP 22 responds to the PING messages transmitted by SCPs 34, 46, 58 by transmitting a message containing a complete list of SCPs (including database servers and their addresses), the location of existing database fragments, the current service state of each listed SCP, and a complete list of the SSPs connected to the system 10. SMP 22 responds to the PING messages transmitted by SSPs 30, 42, 54 by transmitting a message containing a complete list of SCPs (including database servers and their addresses), the location of existing database fragments, the current service state of each listed SCP, a complete list of the SSPs connected to the system 10, and available circuits in the PSTN carriers serving the listed SSPs.

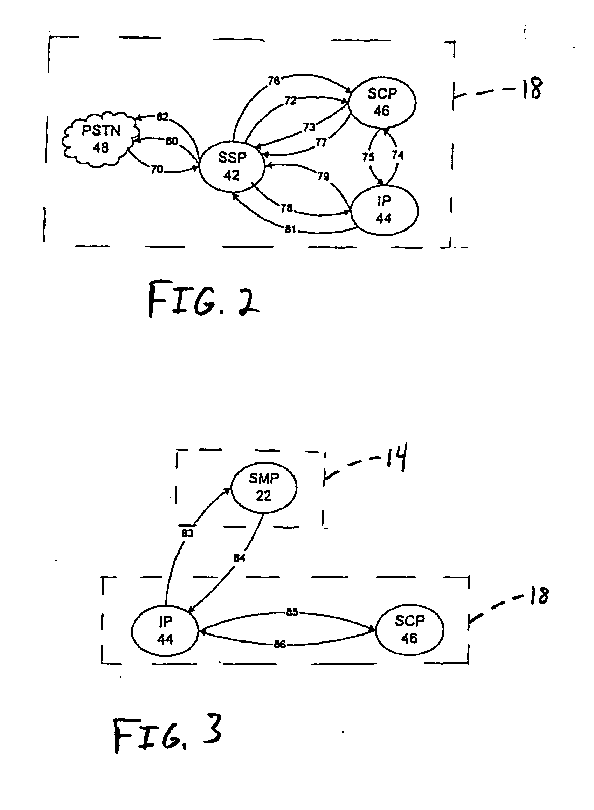

Referring now to FIGS. 2-6, one example of message and transaction communication flow for an inbound call handled by the system of the present invention is illustrated. It should be noted that many other message and transaction communication flows are considered within the scope of the present invention as would be understood by those skilled in the art. It should also be noted that some system elements (e.g., gateways 28, 40, 52 and gatekeepers 26, 38, 50) are omitted from FIGS. 2-6 to avoid confusion.

The following example utilizes the following messaging protocols: UDP/IP Datagrams, SS7-ISUP Signaling, and E&M Wink Start. Although these communication protocols are utilized, there are many other communication protocols that can be utilized as known by those skilled in the art.

### Data Network Messaging Protocols

The UDP/IP Datagram protocol facilitates sending a packet or data stream from point to point in a data network. Since the packet switched network 12 is a TCP/IP based network, the UDP/IP Datagram protocol is used in communications between all of the network elements except for the PSTNs and H.323 Gateways/Gatekeepers. Specifically, the UDP/IP Datagram protocol is used in communications between SSPs and SCPs, IPs and SCPs, SSPs and SMPs, IPs and SMPs, and SCPs and SMPs. As known by those skilled in the art, the UDP/IP Datagram protocol is functionally equivalent to the TCP/IP, X.25, SPX/IPX, Ethernet, ITU-TCAP, and ANSI-TCAP protocols.

### Telephone Network Signaling Protocols

The SS7-ISUP protocol functions as an inter-switch signaling system. In the example below, connections to the PSTN utilize SS7-ISUP protocol. Although SS7-ISUP is utilized, one skilled in the art, using the teachings of the present invention, could utilize alternative protocols including, but not limited to, ISDN-PRI, Euro-ISDN, SS7-TUP, SS7-BTNUP, and V5.2. Emerging signaling systems (e.g., IDPC) that perform inter-switch signaling over packet switched networks are also deemed within the scope of the present invention.

E&M Wink Start functions as an inter-switch signaling system and is usually reserved for directly connected smaller capacity terminations. In the following example, all connections to voice response ports utilize E&M Wink Start signaling. Although E&M Wink Start signaling is utilized, one skilled in the art, using the teaching of the present invention, may utilize alternative signaling protocols including, but not limited to, Feature Group D, Feature Group B, E&M Immediate Start, Groundstart, and E1-MFR2.

### Mixed Data Network/Telephone Signaling Protocols

As discussed above, the H.323/Q.931/H.245 signaling system defines call control mechanisms for establishing and maintaining calls over a TCP/IP network. The signaling system also utilizes gatekeepers that manage bandwidth and access control. In the example below, the communications between SSPs over the packet switched network is Q.931 over TCP/IP, as defined by H.323. Although the H.323/Q.931/H.245 signaling system is utilized, emerging IPDC signaling systems are deemed within the scope of the present invention.

Referring now to FIG. 2, the message and transaction communication flow for an inbound call being connected to a foreign IP is shown. An "address" message is transmitted, at communication 70, from PSTN 48 to SSP 42. The "address" message indicates that an inbound call from a subscriber is entering system 10. Upon receipt of the "address" message, SSP 42 creates a new call object containing a plurality of call elements such as ANI, DNIS, redirect number, original called number, presentation indicators, progress indicators, call identifiers, and session identifiers. Next, at communication 72, SSP 42 transmits the call object and a request for IP service initiation to SCP 46. SCP 46 stores the request and adds Starting Service, Timeout Service, and Timeout call elements to the call object. SCP also stamps the call object with an invocation time. Afterwards, SCP 46, at communication 73, transmits an "acknowledgment" response to SSP 42. The "acknowledgment" response is required to ensure transaction completion. Some examples of "acknowledgment" responses are transaction successful or transaction failure due to lack of IP resources.

Each IP periodically registers with its associated SCP to inform the SCP of available IP resources. When IP 44, at communication 74, registers with SCP 46, SCP 46 attempts to match an available IP resource with the IP service requested by SSP 42. Once a match is found, SCP 46 queues a switching service for SSP 42. Afterwards, SCP 46, at communication 75, transmits a "response" message to IP 44. The "response" message includes a copy of the call object stamped with a hand-off time. It should be noted that the original call object is retained by SCP 46.

Each SSP periodically registers with an associated SCP to request any pending switching services queued by the associated SCP. When SSP 42, at communication 76, registers with SCP 46, SCP 46, at communication 77, hands off the queued switching service for IP 44. Afterwards, at communication 78, SSP 42 seizes the matched IP resource of IP 44. It should be noted that the matched IP resource is waiting for the seizure. Upon detection of the seizure, IP 44, at communication 79, transmits a WINK signal to SSP 42 acknowledging the arriving service request and indicating that there is a complete circuit extending from the subscriber to media resource of IP 44. Upon receiving the WINK signal, SSP 42, at communication 80, transmits an "address complete" message to PSTN 48. The "address complete" message indicates that no further addressing is required.

Next, at communication 81, IP 44 transmits an "answer" message to SSP 42. The "answer" message indicates that the resource of IP 44 has gone off hook to receive the inbound call. Afterwards, at communication 82, SSP 42 propagates the "answer" message to PSTN 48 indicating that the call is answered.

At this point, a telephone call between the subscriber and the media resource of IP 44 is established. The media resource can play voice prompts, gather DTMF or touch tones from the subscriber, record spoken voice, receive faxes, and generate faxes. However, the media resource of IP 44 is unable to provide the additional customized and/or enhanced services provided by the Home IP 32.

After answering the inbound call, the media resource of IP 44 plays a "welcome" message (e.g., "Welcome to the ABC Calling Card and Voicemail Company") and prompts the subscriber for the entry of a PIN/Acct/Identification number (e.g., "Please enter your subscriber ID number now"). Next, the media resource of IP 44 gathers the entered DTMF or touch tones. Afterwards, the media resource may prompt the subscriber for a separate Password/Authorization code and gather the entered DTMF or touch tones. It should be noted that use of a Password/Authorization code is an optional feature of the system of the present invention.

If required, the media resource of IP 44 could permit the selection of a language for all further communication, or alternatively, the spoken language of the caller could be based on the number dialed or the arriving port.

After the DTMF or touch tones have been gathered by the media resource of IP 44, the entered data must be checked against information stored in a database fragment located in a given SCP. Locating the SCP is achieved via DTL and is briefly described below and is described in further detail in copending U.S. Patent Application Serial No. 09/135,607 to MeLampy et al., filed August 18, 1998, incorporated herein in its entirety by reference.

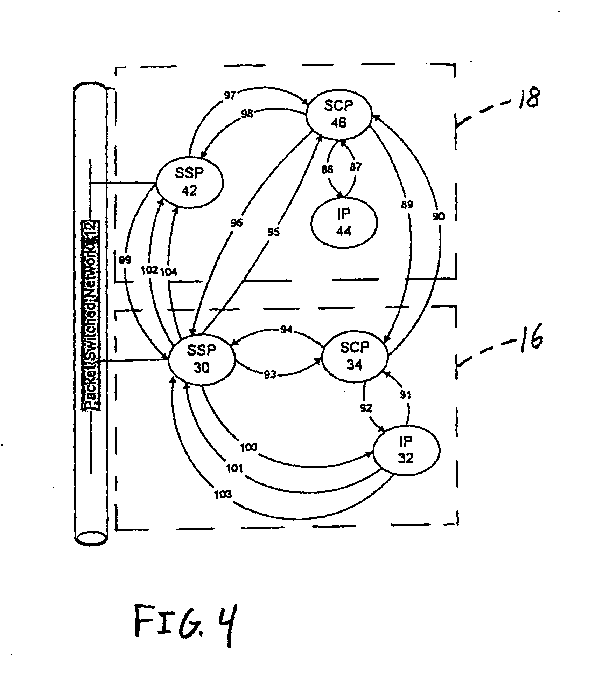

Referring now to FIG. 3, the message and transaction communication flow for the database authentication of a subscriber is shown. IP 44, at communication 83, periodically transmits a PING message to SMP 22 to validate the current DTL stored in IP 44. As previously mentioned, the DTL is used by IP 44 to determine which SCP in system 10 serves the database fragment that stores the required subscriber data (e.g., subscriber password, subscriber balance, address of home IP). In response to receipt of the PING message, SMP 22, at communication 84, transmits a list of currently active SCPs. The list identifies the SCPs in system 10, the SCPs' service states, and the database fragments served by each SCP. If necessary, IP 44 updates its DTL to reflect any changes detected in the received list. Afterwards, IP 44 selects the SCP serving the needed database fragment via the DTL. The DTL uses the call elements (e.g., DNIS, ANI) contained in the call object stored in IP 44 to derive the address of the relevant SCP (identified as SCP 46 in FIG. 3). Once SCP 46 is selected, IP 44, at communication 85, transmits a database query to SCP 46. The database query includes the collected subscriber ID and password codes (if entered) as well as other discriminating data (e.g., customer partition). In response to the query, SCP 46, at communication 86, transmits a subscriber data record or a failure indication if no record is located. The subscriber data record contains the necessary subscriber data required to complete the call. Some examples of necessary subscriber data are subscriber password, subscriber balance, and the address of the subscriber's home IP. It should be noted that IP 44 will add the home IP address (identified by Network:System:Host) to the call object stored in IP 44.

If the database query resulted in an error (e.g., record not found or entered password invalid), IP 44 transmits a failure indication to the subscriber and preferably permits the subscriber to re-enter the PIN/Acct/Identification and Password/Authorization codes. If the error persists, IP 44 disconnects the subscriber after the subscriber has made a predetermined number of attempts to re-enter the codes.

If the database query is successful, IP 44 receives a subscriber record. The subscriber record contains information indicating how the inbound call is to be processed. The information in the subscriber record is transmitted to IP 44 in version independent information elements that are machine independent. The version independent information elements are described in copending U.S. Patent Application Serial No. 09/122,148 to MeLampy et al., filed July 24, 1998, incorporated herein in its entirety by reference.

Upon a successful database access, the Home IP address is extracted from the subscriber data record. The Home IP address contains a Network:System:Host address that can be converted to an IP address using a Domain Naming System (DNS) sub-system.

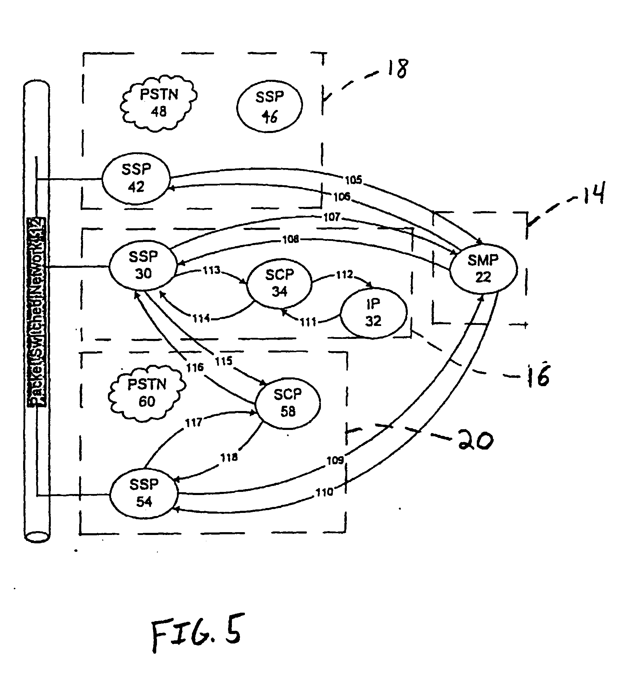

Referring now to FIG. 4, the message exchanges (communications) that are required to transfer a subscriber session from a foreign IP to the subscriber's home IP are shown. IP 44, at communication 87, transmits a message to SCP 46 invoking a subscriber service to be processed by Home IP 32. The message includes the call object having the Home address of the home IP. Next, SCP 46, at communication 88, indicates that the invocation is accepted if the call is in a valid state. If the call is no longer in a valid state, SCP 46 rejects the invocation. Afterwards, SCP 46, at communication 89, forwards the invocation to Home SCP 34. As discussed above, Home SCP 34 controls access to Home IP 32 via a home SSP 30. Home SCP 34, at communication 90, responds to SCP 46 by accepting or rejecting the invocation. The invocation is rejected if there are no IP resources available to carry out the requested service or if the requested service is not supported by Home IP 32. If the invocation is accepted, Home SCP 34 stores the invocation and a second copy of the call object. It should be noted that two complete call objects exist at this time; one stored in the foreign SCP 46, the other stored in the home SCP 34.

As discussed above, each IP periodically registers with its associated SCP to inform the SCP of available IP resources. When Home IP 32 registers with Home SCP 34, at communication 91, Home SCP 34, at communication 92, forwards the invocation to Home IP 32 and queues a "connection service" request for Home SSP 30.

As discussed above, each SSP periodically registers with an associated SCP to request any pending switching services queued by the associated SCP. When Home SSP 30, at communication 93, registers with Home SCP 34, Home SSP 30, at communication 94, receives the queued "connection service" request. Upon examination of the "connection service" request, Home SSP 30 determines that the request is from foreign SSP 42. Afterwards, Home SSP 30, at communication 95, transmits a "remote connection service" request to SCP 46. The request includes Home gateway and gatekeeper addresses through which Home SSP 30 can be accessed. Next, SCP 46, at communication 96, informs Home SSP 30 whether the request has succeeded or failed. The request succeeds if the call is still valid and the request fails if the call has become invalid.

If the request has succeeded, SCP 46 queues the "remote connection service" request and waits for SSP 42, at communication 97, to request all queued connection requests from SCP 46. After SSP 42, at communication 98, receives the queued connection request (including the Home gateway and gatekeeper addresses), SSP 42, at communication 99, initiates a call setup with Home SSP 30 over network 12. SSP may initiate the call setup by initiating a VoIP call setup via Q.931/H.245 signaling or an ATM call setup via Q.931 signaling.

Next, Home SSP 30, at communication 100, seizes the available resource at Home IP 32. Afterwards, Home IP 32, at communication 101, transmits a WINK signal to Home SSP 30 acknowledging the arriving service request and indicating that there is a complete circuit extending from the media resource to SSP 30. SSP 30, at communication 102, responds by transmitting a "connect" message via packet switched network 12 to SSP 42. The "connect" message indicates that the call pathway has been completed. At communication 103, the media resource in Home IP 32 goes off-hook and transmits an "answer" message to SSP 30. Afterwards, SSP 30, at communication 104, propagates the "answer" message to SSP 42 via packet switched network 12. SSP 42, in turn, propagates the "answer" message to PSTN 48 (not shown) to indicate that the call is answered.

At this point, the call is connected from PSTN 48 to Home IP 32 through SSP 42, Network 12, and Home SSP 30. Since the call is connected over the packet switched network 12, there are several efficiency-related benefits:
Q.732.2 or Q.729 compression fits the equivalent of at least eight calls into a data length normally occupied by a single call transmitted via conventional signaling techniques.
System efficiency is effectively doubled by the removal of periods of silence from a call since silence removal avoids transmitting data from a listening party to a speaking party.
Echo cancellation is built into the gateways used to bridge between the circuit switched and packet switched networks. Echo cancellation allows for the isolation and filtering of unwanted signals caused by echoes from the main transmitted signal. Therefore, additional devices don't need to be added to system 10 to provide echo cancellation.

Referring now to FIG. 5, the message and transaction communication flow for selecting a least cost call route for an outbound call is shown. After the subscriber finishes utilizing the service provided by the media resource of IP 32, the subscriber may desire to place an outgoing call. For example, the subscriber may decide to call an individual who left a voicemail message after the subscriber finishes listening to the voicemail message. This can be accomplished using a "one button return call" feature provided by the media resource of IP 32. The feature permits the subscriber to return a voicemail message without dialing the number of the individual who left the original voicemail message. The subscriber merely enters a single digit and the media resource of IP 32 responds by dialing a stored number of the original caller. The original caller's number is collected from the PSTN or the caller when the caller is connected to the subscriber's voicemail.

As discussed above, SSPs 30, 42, 54 periodically transmit PING messages to SMP 22. The PING messages include various pieces of information. To avoid confusion, only the information required for least cost call routing will be discussed in the description of FIG. 5. SSP 42, at communication 105, periodically transmits a PING signal to SMP 22. The PING signal contains a list of PSTN carriers (e.g., AT&T, MCI) that serve SSP 42, the number of available circuits provided by each listed PSTN carrier, and the cost to use the available circuits of the listed PSTN carriers. The cost may vary by time of day, day of week, day of month, or by any other criteria known by those skilled in the art. In response to receiving the PING message, SMP 22, at communication 106, transmits a "response" message to SSP 42. The "response" message contains a list of all the SSPs connected to system 10, the PSTN carriers associated with the listed SSPs, the available circuits provided by the listed PSTN carriers, and the cost to use the available circuits of the PSTN carriers. In this manner SMP 22 keeps SSP 42 appraised of all the available circuits in system 10. (It should be noted that there is a latency between SMP and SSP updates due to a predetermined time lapse between the transmission of the PING and response signals). Likewise, SSP 30 and SSP 54 are appraised of the available circuits via the communications 107, 108, 109, and 110 exchanged with SMP 22.

When the subscriber indicates to IP 32 that the subscriber desires to make an outbound call (e.g., by dialing an outbound number or using the "one button return call" feature), IP 32, at communication 111, transmits an outbound call invocation and a call object to SCP 34. The call object contains the destination number and a list of acceptable carriers. Afterwards, SCP 34, at communication 112, transmits a response signal to IP 32 indicating that SCP 34 received the outbound call invocation and a switching service request has been queued. (It should be noted that SCP 34 may transmit a failure signal to IP 32 if the call is no longer valid, e.g., the subscriber's balance has fallen below a predetermined limit). When SSP 30, at communication 113, requests for SCP 34 to transmit all queued switching service requests, SCP 34, at communication 114, forwards the outbound call invocation and the call object (stamped with a forwarding time) to SSP 30.

After receiving the call invocation and the call object, SSP 30 must determine the least cost route for connecting the subscriber to the terminal or device located at the destination number. The method and algorithm for least cost routing are described below and are described in further detail in copending United States Patent Application Serial No. 09/154,536 to MeLampy et al., filed September 16, 1998, incorporated herein in its entirety by reference. Initially, SSP 30 searches its locally stored list of SSPs, and associated PSTN carriers, to determine which SSP and carrier combination has the lowest available rate. Afterwards, SSP 30 determines whether the identified PSTN carrier has at least a threshold number "N" of circuits available. If not, SSP 30 continues the search until SSP 30 identifies an SSP and PSTN carrier combination that has the lowest available rate and at least the threshold number "N" of circuits available. Once SSP 30 identifies an SSP and PSTN combination (e.g., SSP 54 and PSTN 60), SSP 30 transmits a service invocation to the SCP (e.g., SCP 58) controlling the identified SSP (e.g., SSP 54). If SCP 58 determines that there are no available circuits for the identified SSP 54 and PSTN carrier 60 combination (due to seizure of the circuits during the latency period discussed above), SCP 58, at communication 116, transmits a failure response to SSP 30. It should be noted that a failure response is also generated if the state of node 16 is invalid for the service request. If SCP 58 determines that there are available circuits for the identified SSP 54 and PSTN carrier 60 combination, SCP 58 transmits a response to SSP 30, at communication 116, that indicates that the outbound call invocation has been received and queued.

When SSP 54, at communication 117, requests SCP 58 to transmit all queued service requests, SCP 58, at communication 118, forwards the outbound call invocation and the call object (stamped with a forwarding time) to SSP 54. In response, SSP 54 allocates an outbound circuit in PSTN carrier 60 for the outbound call and inserts the ID of the allocated circuit into the call object.

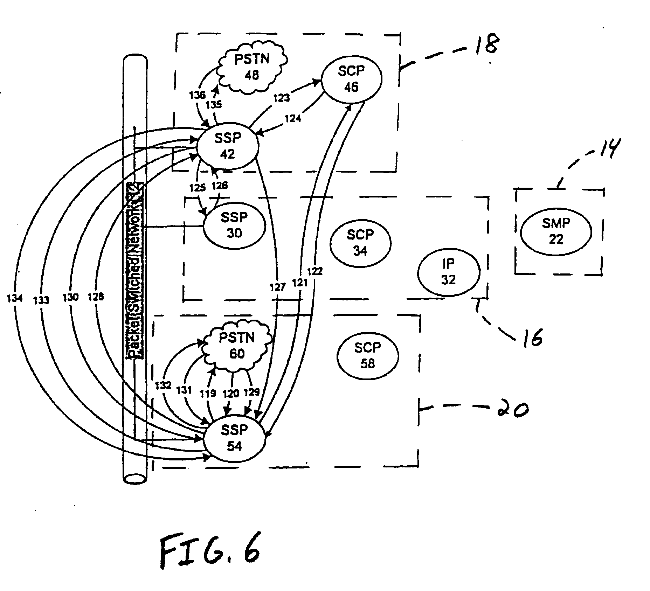

Referring now to FIG. 6, the message and transaction communication flow for completing the outbound call is shown. After SSP 54 allocates the outbound circuit in PSTN carrier 60, SSP 54, at communication 119, transmits an "initial address" message to PSTN 60 in an attempt to seize the allocated circuit. In response, PSTN 60, at communication 120, transmits an "address complete" message to SSP 54 that indicates that the allocated circuit has been seized. Afterwards, SSP 54, at communication 121, transmits an "invoke connection service" request to SCP 46. The request includes the addresses of the gateway and gatekeeper that provide access to SSP 54. Next, SCP 46, at communication 122, informs SSP 54 whether the request has succeeded or failed. If the connection request has succeeded, SCP 46 queues the connection request and waits for SSP 42, at communication 123, to request all queued connection requests from SCP 46. After SSP 42, at communication 124, receives the queued connection request (including the gateway and gatekeeper addresses), SSP 42, at communication 125, transmits a "release" request to Home SSP 30. The "release" request orders Home SSP 30 to release its seized connections to packet switched network 12 and IP 32. In response to the "release" request, Home SSP 30 releases the connections, thereby freeing the previously used IP resource and network connection, and, at communication 126, transmits a "release complete" message to SSP 42 indicating that the inbound call connection to IP 32 has been dropped.

Afterwards, SSP 42, at communication 127, initiates a call setup with SSP 54 over network 12. SSP 42 may initiate the call setup by initiating a VoIP call setup via Q.931/H.245 signaling or an ATM call setup via Q.931 signaling. In response, SSP 54, at communication 128, transmits a message to SSP 42 acknowledging that a port in SSP 54 has been seized by SSP 42 via network 12. Next, PSTN 60, at communication 129, transmits an "answer" message to SSP 54 indicating that the outbound call has been answered. Afterwards, SSP 54, at communication 130, propagates the "answer" message to SSP 42 via packet switched network 12. SSP 42, in turn, propagates the "answer" message to PSTN 48 to indicate that the call is answered. At this point, the subscriber can converse with the called party over a call pathway that extends from PSTN 48 to PSTN 60 via SSP 42, network 12, and SSP 54.

When the call is completed (shown in FIG. 6 as the calling party hanging up), PSTN 60, at communication 131, transmits a "release" request to SSP 54. The "release" request indicates that the called number has disconnected and that the seized circuit should be released. In response, SSP 54, at communication 132, gives a backwards release to the seized circuit and inserts a disconnect time into the call object. Next, SSP 54, at communication 133, transmits a "release" request to SSP 42 and inserts a disconnect time into the call object. In response, SSP 42, at communication 134, transmits a "release complete" message to SSP 54 indicating that the connection to network 12 is being released. Afterwards, both SSP 42 and SSP 54 release their connections to network 12. Next, SSP 42, at communication 135, transmits a "release circuit" request to PSTN 48. In response, PSTN 48, at communication 136, releases the seized circuit and transmits a "release complete" message to SSP 42.

Those skilled in the art will recognized that the call flow shown in FIGS. 2-6 may have many variations. For example, if the subscriber disconnected in FIG. 6, the call pathway release sequence would be altered. The message and transaction communications for call flow variations are intended to fall within the scope of the present invention.

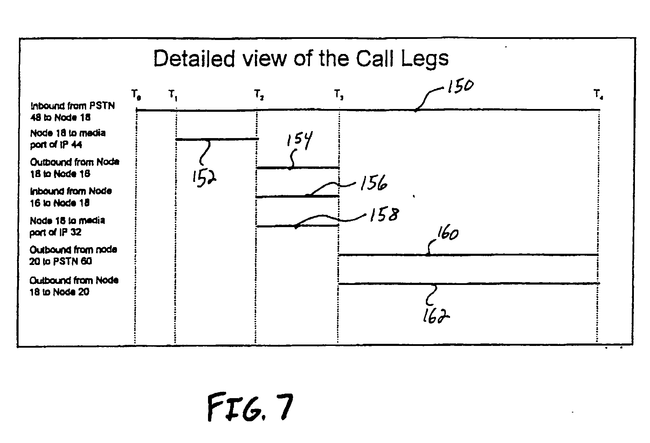

Referring now to FIG. 7, a plurality of call legs 150-162 are shown. The plurality of call legs 150-162 correspond to the call pathways that interconnected nodes 16, 18, and 20 during the call reception, routing, and connection operations described in FIGS. 2-6. Each call leg is managed by a call object contained within a connected node. As discussed above, distinct call objects were instantiated (i.e., created or copied) when the subscriber's call was connected to nodes 16, 18, and 20. An identical session ID was inserted into the call objects of nodes 16, 18, and 20 when the call objects were instantiated. More particularly, a session ID was created when the subscriber's call was received by node 18 and the session ID was copied when the call was connected to nodes 16 and 20. The function of the session ID is to tie all of the call legs together into a single subscriber session, thereby, facilitating the use of the call objects in billing and call accounting operations after the subscriber's call is completed.

Distinct call objects are maintained for each node in order to provide billing records on a distributed basis and to facilitate failure modes and call tracing/debugging. For example, if a signaling link goes down or a node suddenly becomes unavailable for use, data describing the connection states and instructions concerning post link failure activities need to be contained in each node handling the call.

Only five call legs 150, 154, 156, 160, and 162 are utilized for billing and accounting purposes. These call legs are utilized since they represent call connections extending between nodes. The other two call legs 152 and 158 are not normally utilized since they represent call connections internal to nodes 16 and 18. However, interior calls used to connect to media resources may be kept for monitoring consumption of media resources.

While the present invention has been described with reference to certain preferred embodiments, those skilled in the art will recognize that various modifications and other embodiments may be provided. These other embodiments are intended to fall within the scope of the present invention, and these variations upon and modifications to the embodiments described herein are provided herein are provided for by the present invention which is limited only by the following claims.

## Claims

1. A method for providing ubiquitous intelligent peripheral services, the method comprising the steps of:
receiving an inbound call from a subscriber;
gathering a plurality of call elements associated with the inbound call;
deriving a location of a home intelligent peripheral of the subscriber from the gathered plurality of call elements; and
connecting the inbound call to the home intelligent peripheral via a packet switched network.

2. The method of claim 1, wherein the step of gathering a plurality of call elements further comprises the step of:
gathering at least one of the following call elements: an ANI of the inbound call, a DNIS of the inbound call, a redirect number of the inbound call, an OCN of the inbound call, a PIN inputted by the subscriber, and a password inputted by the subscriber.

3. The method of claim 1 or 2, wherein the step of receiving the inbound call from the subscriber further comprises the step of:
receiving the inbound call from a circuit switched network.

4. The method of claim 3 wherein the circuit switched network is a PSTN.

5. The method of any preceding claim, further comprising the step of:
providing at least one customized service to the subscriber after the inbound call is connected to the home intelligent peripheral.

6. The method of claim 5 wherein the customized service is one of: voicemail; call waiting; speed dialing; a voice-activated service; voice activating dialing; and a voice recognition service.

7. The method of any preceding claim, further comprising the step of:
periodically receiving configuration data that identifies a plurality of database fragments.

8. The method of claim 7 wherein the step of deriving the location of the home intelligent peripheral, further comprises the steps of:
selecting a database fragment from the plurality of database fragments based on the gathered plurality of call elements; and
accessing the location of the home intelligent peripheral from the selected database fragment.

9. The method of any preceding claim, wherein the step of gathering a plurality of call elements further comprises the step of:
gathering at least one of the following call elements: an ANI of the inbound call, a DNIS of the inbound call, a redirect number of the inbound call, an OCN of the inbound call, a PIN inputted by the subscriber, and a password inputted by the subscriber.

10. A system for providing ubiquitous intelligent peripheral services, the system comprising:
means for receiving an inbound call from a subscriber;
means for gathering a plurality of call elements associated with the inbound call;
means for deriving a location of a home intelligent peripheral of the subscriber from the gathered plurality of call elements; and
means for connecting the inbound call to the home intelligent peripheral via a packet switched network.

11. The system of claim 10, wherein the means for gathering the plurality of call elements further comprises:
means for gathering at least one of the following call elements: an ANI of the inbound call, a DNIS of the inbound call, a redirect number of the inbound call, an OCN of the inbound call, a PIN inputted by the subscriber, and a password inputted by the subscriber.

12. The system of claim 10 or 11, wherein the means for receiving the inbound call from the subscriber further comprises:
means for receiving the inbound call from a circuit switched network.

13. The system of claim 12 wherein the circuit switched network is a PSTN.

14. The system of any of claims 10 to 13, further comprising:
means for providing at least one customized service to the subscriber after the inbound call is connected to the home intelligent peripheral.

15. The system of any of claims 10 to 14, further comprising:
means for periodically receiving configuration data that identifies a plurality of database fragments.

16. The system of claim 15 wherein the means for deriving the location of the home intelligent peripheral comprises:
means for selecting a database fragment from the plurality of database fragments based on the gathered plurality of call elements; and
means for accessing the location of the home intelligent peripheral the selected database fragment.

17. The system of any of claims 10 to 16, wherein the means for gathering a plurality of call elements further comprises:
means for gathering at least one of the following call elements: an ANI of the inbound call, a DNIS of the inbound call, a redirect number of the inbound call, an OCN of the inbound call, a PIN inputted by the subscriber, and a password inputted by the subscriber.

18. A system for receiving a call from a circuit switched network and establishing a call pathway over a packet switched network to provide ubiquitous intelligent peripheral services to a subscriber, the system comprising:
a home intelligent peripheral that provides a customized service to the subscriber;
a home service switching point that connects the home intelligent peripheral to the packet switched network; and
a foreign service switching point connected to the packet switched network and the circuit switched network, the foreign service switching point having dynamically transportable logic that facilitates access to the system, the foreign service switching point identifying a location of the home intelligent peripheral via the dynamically transportable logic in response to receiving a call from the subscriber via the circuit switched network.

19. The system of claim 18, wherein the foreign service switching point establishes a call pathway to the identified home intelligent peripheral via the packet switched network and the home service switching point.

20. The system of claim 18 or 19, wherein the foreign service switching point connects the received call to the home intelligent peripheral via the established call pathway.

21. The system of claim 18, 19 or 20, further comprising:
a database connected to the packet switched network, the database having a database fragment containing the location of the home intelligent peripheral.

22. The system of claim 21, wherein the dynamically transportable logic collects a plurality of call elements associated with the subscriber's call and derives a location of the database fragment from the collected plurality of call elements.

23. The system of claim 21 or 22, wherein the foreign switching service point identifies the location of the home intelligent peripheral by accessing the database fragment located by the dynamically transportable logic.

24. The system of any of claims 18 to 23, wherein the collected plurality of call elements include at least one of the following call elements: an ANI of the call, a DNIS of the call, a redirect number of the call, an OCN of the call, a PIN inputted by the subscriber, and a password inputted by the subscriber.

25. The system as claimed in claim 14 or claim 18 or any claim appended thereto wherein the customized service is one of: voicemail; call waiting; speed dialing; a voice-activated service; voice-activated dialing; and a voice-recognition service.
